# FASCICULE DE BREVET EUROPEEN

(11) **EP 0 603 969 B1**
(45) Date de publication et mention de la délivrance du brevet: **17.03.1999**
(21) Numéro de dépôt: 93203602.3
(22) Date de dépôt: 21.12.1993
(51) Int. Cl.: G01K 11/16

(54) **Appareil à effet thermique muni d'un indicateur de température**
Thermisch wirkende Vorrichtung mit einem Temperaturanzeiger
Thermal effect apparatus provided with a temperature indicator

(30) Priorité: 22.12.1992 FR 9215502
(43) Date de publication de la demande: 29.06.1994
(73) Titulaire: LABORATOIRES D'ELECTRONIQUE PHILIPS S.A.S., 94450 Limeil-Brévannes (FR); Koninklijke Philips Electronics N.V., 5621 BA Eindhoven (NL)
(72) Inventeur: Hazan, Jean-Pierre, Société Civile S.P.I.D., F-75008 Paris (FR); Nagel, Jean-Louis, Société Civile S.P.I.D., F-75008 Paris (FR)
(74) Mandataire: Landousy, Christian

(56) Documents cités:
- GB-A- 2 197 109
- US-A- 4 524 778

## Description

L'invention concerne un appareil à effet thermique comprenant un corps chaud et un indicateur pour visualiser une température du corps chaud à l'aide d'au moins une substance présentant une transition d'une propriété visuelle lorsque la température du corps chaud atteint une température de référence.

Il peut s'agir d'appareils à usage domestique tels que : fers à repasser, tables de cuisson, tables de chauffage, fours de cuisson, appareils de chauffage, grilles-pain, conditionneurs d'air ou autres, ou des appareils à usage professionnel tels que des fours en tous genres.

Tous ces appareils comportent un corps chaud qui est chauffé par un élément chauffant. Lorsque le corps chaud est accessible à l'utilisateur, il peut être touché accidentellement par un utilisateur ce qui peut lui occasionner des brûlures graves. On a donc pensé à mettre en garde l'utilisateur en l'avertissant lorsque le corps chaud est à une température sans danger pour lui ou lorsqu'au contraire il doit s'abstenir de toucher le corps chaud. Certains appareils disposent de diodes électroluminescentes d'alarme qui, lorsque l'appareil est branché sur le secteur, réagissent en coopération avec un capteur thermique commandant l'alimentation électrique de ces diodes électroluminescentes. Or ce type d'alarme n'est plus opérationnel si on débranche l'appareil du secteur, ce qui est en particulier le cas de nombreux appareils portables que l'on doit par exemple ranger et/ou nettoyer tels que fers à repasser, tables de cuisson portables ou autres. L'élément chauffant initialement porté à haute température possède le plus souvent une forte inertie thermique et un refroidissement lent d'où un risque de brûlure par contact en l'absence d'alarme indiquant que l'élément est à une température au-dessus d'une température de sécurité et ceci alors que l'appareil n'est pas alimenté électriquement.

On connaît des substances ayant des propriétés optiques variant brusquement avec la température et qu'on a pensé pouvoir utiliser comme indicateurs pour visualiser la température du corps chaud. Ainsi le document JP KOKAI 63-61081-A révèle un matériau à base d'oxyde de plomb / bismuth / vanadium qui supporte des températures élevées. On a pensé l'utiliser à cette fin dans des appareillages domestiques. Mais ce matériau et d'autres encore présentent des températures de transition élevées de 80° à 150°C de sorte qu'ils ne peuvent pas être utilisés directement en toute sécurité pour cet usage. En effet, le domaine dit de sécurité est situé en dessous de ces températures et un utilisateur peut se brûler s'il touche le corps chaud. La sécurité n'est donc pas assurée.

On connaît également d'autres substances qui présentent des températures de transition plus proches des températures de sécurité telles que les cristaux liquides par exemple.

Malheureusement ces substances ne peuvent pas supporter, sans être détruites, les températures élevées que présente le corps chaud en fonctionnement normal. Il n'est donc pas possible de les substituer directement aux substances précédentes de la manière prévue pour visualiser un domaine de sécurité.

Le but de l'invention est donc de définir des moyens d'utilisation de ces dernières substances pour permettre d'indiquer à l'utilisateur s'il peut en toute sécurité toucher le corps chaud en définissant une température de sécurité qui soit compatible avec la perception d'un utilisateur moyen.

Ce but est atteint avec un appareil tel que mentionné dans le préambule dans lequel ladite substance a une température de destruction inférieure à la température maximale du corps chaud et dans lequel il est prévu un réducteur de température destiné à imposer un gradient thermique entre la température du corps chaud et la température de ladite substance, défini pour que cette dernière ne puisse atteindre ladite température de destruction.

Ainsi, l'indicateur de température comprend :
- au moins un réducteur de température qui développe un gradient thermique entre une première température (Tc) sur une première extrémité, et une seconde température (Ts) sur une seconde extrémité, la première extrémité du réducteur étant assujettie au corps chaud,
- et au moins une substance qui est disposée sur le réducteur de température entre la première et la seconde extrémité, la substance présentant une transition d'une propriété visuelle lorsque ladite première température (Tc) atteint une température de référence (Tr) prédéterminée.

Pour assurer une sécurité d'utilisation, la température de référence est une température dite de sécurité d'utilisation en dessous de laquelle un utilisateur ne peut pas se brûler. De plus, la température de transition de la substance doit être supérieure à la température ambiante maximale usuelle pour que la substance ait subi sa transition lorsque l'appareil revient à la température ambiante.

Ainsi avantageusement, en particulier lorsque l'appareil n'est pas connecté électriquement, l'indicateur de température, selon l'invention, permet d'une manière passive, c'est-à-dire en l'absence de toute alimentation électrique de l'indicateur, d'indiquer à l'utilisateur des conditions de sécurité d'utilisation.

Le réducteur peut être constitué soit d'une lame mince et/ou étroite qui constitue une impédance thermique soit d'un radiateur, soit d'un support relié à un fil formant gradient, soit par une partie de socle formant un gradient thermique. La lame peut être réalisée dans un métal ou dans un isolant thermique. Le radiateur peut par exemple être un radiateur à ailettes. Le réducteur peut faire partie intégrante d'un socle, support du corps chaud (table de cuisson par exemple), soit en rapportant le réducteur sur le socle soit en utilisant une partie du socle pour obtenir ledit gradient thermique. La première extrémité du réducteur est fixée au corps chaud. L'autre extrémité est munie, par exemple enduite, d'une substance thermochrome. Celle-ci peut aussi être rapportée par collage ou autres. Le corps chaud pouvant avoir une température d'utilisation trop élevée pour le thermochrome, le réducteur est conçu de telle façon que, grâce au refroidissement ambiant, il apparaît un fort gradient thermique entre les deux extrémités du réducteur lorsque la température Tc du corps chaud est élevée et un gradient plus réduit quand cette température Tc s'abaisse à un niveau où l'on peut toucher le corps chaud. Ainsi, quelle que soit la température du corps chaud, le gradient obtenu grâce au réducteur de température impose à la substance thermochrome une température inférieure à sa température de destruction.

L'extrémité munie de la substance thermochrome peut être libre dans l'air ou maintenue, avec des échanges thermiques réduits, sur une partie non chauffée. On peut utiliser des cristaux liquides pour lesquels leur couleur ou leurs coefficients de transmission-reflexion varient avec la température ou d'autres substances similaires.

A la substance servant à révéler une température de sécurité, on peut adjoindre une seconde substance qui elle présente une transition d'une propriété visuelle à une autre température plus élevée. On dispose cette seconde substance sur une partie plus chaude du réducteur de température de sorte que la seconde substance subit ladite transition lorsque la température du corps chaud se situe à une température indicatrice d'un appareil prêt à l'emploi.

Ainsi lorsque l'appareil est connecté électriquement, l'indicateur de température indique, également de manière passive, qu'un état de "prêt à l'emploi" est atteint.

Il est possible d'utiliser deux réducteurs, l'un muni de la substance révélatrice d'une température de sécurité du corps chaud et l'autre muni de la substance révélatrice d'une température indicatrice d'un appareil prêt à l'emploi.

Ces différents aspects de l'invention et d'autres encore seront apparents et élucidés à partir des modes de réalisation décrits ci-après.

L'invention sera mieux comprise à l'aide des figures suivantes, données à titre d'exemples non limitatifs, qui représentent :
Figure 1 : un schéma d'un réducteur de température muni d'une première substance.
Figure 2 : une courbe des variations de la température de la première substance en fonction de la température du corps chaud.
Figure 3 : un schéma d'un fer à repasser muni d'un réducteur.
Figure 4 : un schéma d'un réducteur de température muni d'une seconde substance.

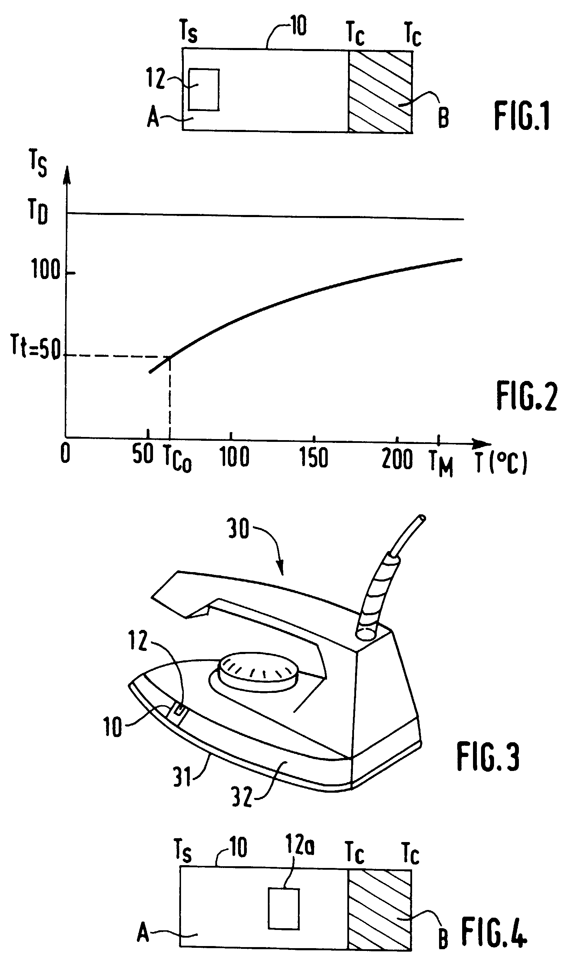

La figure 1 représente un réducteur de température formé d'une lame mince 10 munie à une extrémité d'une substance 12 telle qu'une substance thermochrome ou un cristal liquide. Une des extrémités B, représentée par des hachures sur la figure 1, est destinée à être fixée au corps chaud. La température de la partie hachurée est donc voisine de la température Tc du corps chaud. Entre les deux extrémités A et B de la lame 10 se développe un gradient thermique Tc-Ts, où Ts est la température à laquelle se trouve la substance thermochrome. Les variations de la température Ts, en fonction de la température Tc du corps chaud, sont représentées sur la figure 2 dans le cas, donné à titre d'exemple, d'une lame munie à une extrémité d'une pastille de cristal liquide. Le réducteur consistait en une lame de cuivre noire de 0,1 mm d'épaisseur, de 15-20mm de long, de 12mm de large, coincée sur une semelle de fer à repasser. Le gradient de température était de l'ordre de 80-90°C entre l'extrémité munie de la substance thermochrome (température de la substance thermochrome ≈ 100-110°C) et la semelle (température de semelle de ≈ 200°C). Ce gradient se réduisait à ≈ 10°C autour de Tc ≈ 60°C (température de transition de la substance thermochrome Tt ≈ 50°C). Ainsi la température maximale supportée par la substance thermochrome était inférieure à sa température de destruction située vers TD ≈ 140-150°C.

Ainsi le gradient thermique obtenu par le réducteur de température est tel que d'une part la température de transition Tt de la substance correspond à la température de sécurité TCo choisie pour le corps chaud, et d'autre part est tel que, à la température maximale TM du corps chaud, correspond une température maximale supportée par la substance qui soit inférieure à sa température de destruction TD. Par ailleurs, la température de transition de la substance thermochrome doit être supérieure à la température ambiante maximale usuelle TAM pour que la couleur puisse rebasculer lorsque le fer est froid. On considère habituellement que la température TAM est de l'ordre d'environ 40°C. Les températures de sécurité ne sont pas normalisées et peuvent dépendre de la durée de contact avant réaction et retrait de la peau, de la qualité de contact, de la masse thermique du corps chaud, etc... La température de sécurité pourrait être choisie entre 40°C et 70°C, par exemple, vers 60°C ou 70°C. Une température de transition au refroidissement supérieure à 45-50°C et inférieure à 55-60°C convient donc.

A titre d'exemple, la figure 3 représente un mode de fixation du réducteur de température sur un fer à repasser 30 muni d'une semelle 31 et d'un socle 32. L'extrémité B de la lame 10 (figure 1) est mise en contact avec la semelle 31 qui constitue ici le corps chaud. Cette mise en contact peut se faire en coinçant la lame entre la semelle et le socle, en la soudant, ou en la rivant à la semelle ou tout autre mode de fixation approprié. L'autre extrémité A qui est refroidie par l'air ambiant peut être laissée libre mais, préférentiellement pour des questions de solidité, elle est maintenue au socle 32 par exemple par collage, pincement ou autres. Comme ceci peut intervenir sur le gradient thermique, il est alors nécessaire de tenir compte du mode de maintien pour déterminer la nature et/ou les dimensions de la lame compte tenu du fait que la température de transition Tt de la substance doit être atteinte lorsque la semelle atteint en se refroidissant la température de sécurité TCo.

Vu le faible coût, on peut envisager de monter plusieurs réducteurs de température en plusieurs endroits pour qu'ils puissent être vus dans différentes conditions de pose et d'observation du fer. Ainsi, ils peuvent être placés à l'avant, sur le côté du fer (visibles quand le fer est posé à plat) et/ou en-dessous, dans une partie en retrait qui existe souvent dans les fers à repasser, pour être vus quand le fer est posé verticalement.

L'invention est également très utile dans le cas des plats de maintien au chaud, des plaques de cuisson de table (exemple pierre de cuisson, fondue...). La lame peut être coincée entre la pierre de cuisson et le socle sur lequel elle est posée. On peut placer de tels réducteurs sur les différents côtés pour être visibles par tous les convives. Le réducteur peut faire partie intégrante de la plaque.

On peut aussi placer le réducteur sur une paroi de fours de cuisson, d'appareils de chauffage, de grilles-pain, de conditionneurs d'air ou autres.

Préférentiellement, le réducteur possède une très faible masse thermique de sorte qu'il n'y a guère de risque de se brûler si on le touche accidentellement pour un court instant. Cependant, on peut protéger le réducteur en le plaçant sous une fenêtre transparente pour assurer une protection thermique et mécanique.

Vu le faible coût de ce type de dispositif et la facilité pour placer plusieurs dispositifs en différents endroits pour être vus par plusieurs personnes (convives par exemple), on peut envisager d'utiliser le même principe pour déterminer lorsque une plaque de cuisson ou une semelle de fer à repasser par exemple ont atteint en s'échauffant une température TPAE rendant l'appareil prêt à l'emploi. Cette température est élevée, en général située entre 200 et 300°C. Il n'existe pas de substances fiables et d'un coût réduit disposant d'une température de transition dans ces gammes de température avec en plus une variation de couleur très franche et visible. On peut mettre en oeuvre le même principe que celui décrit préalablement, c'est-à-dire utiliser un réducteur de température à gradient thermique. Pour cela une autre substance 12a (figure 4), ayant une température de transition élevée, est disposée sur le réducteur en un endroit compatible avec son basculement lorsque le corps chaud atteint la température indicatrice d'un appareil prêt à l'emploi. Ainsi lorsque le corps chaud atteint une température de référence égale à TPAE (entre 200 et 300°C par exemple), l'endroit où se trouve la seconde substance thermochrome peut avoir des températures de l'ordre de 150°C voire 120°C permettant l'utilisation de matériaux comme ceux cités dans le document JP KOKAI 63-61081-A.

Il est possible de disposer la première substance et la seconde substance sur le même réducteur en les disposant à des endroits respectifs différents où la température de la lame du réducteur convient. Il est également possible de disposer les deux substances sur des réducteurs différents.

## Revendications

1. Appareil (30) à effet thermique comprenant un corps chaud (31) et un indicateur pour visualiser une température du corps chaud à l'aide d'au moins une substance présentant une transition d'une propriété visuelle lorsque la température (Tc) du corps chaud atteint une température (Tr) de référence,
caractérisé en ce que ladite substance a une température (Td) de destruction inférieure à la température (Tm) du corps chaud et en ce qu'il est prévu un réducteur de température (10) destiné à imposer un gradient thermique entre la température (Tc) du corps chaud et la température (Ts) de ladite substance, défini pour que cette dernière ne puisse atteindre ladite température de destruction (Td).

2. Appareil selon la revendication 1 caractérisé en ce que ladite substance est un cristal liquide.

3. Appareil selon l'une des revendications 1 ou 2 caractérisé en ce que le réducteur est constitué soit d'une lame mince et/ou étroite, soit d'un radiateur, soit d'un support relié à un fil formant gradient, soit par une partie de socle formant un gradient thermique.

4. Appareil selon les revendications 1 à 3 caractérisé en ce que la propriété visuelle est soit une coloration soit un coefficient de réflexion/transmission optique.

5. Appareil selon l'une des revendications 1 à 4 caractérisé en ce qu'une première substance subit une transition à une première température lorsque ladite température (Tr) de référence est égale à une température (TCo) dite de sécurité d'utilisation.

6. Appareil selon l'une des revendications 1 à 5 caractérisé en ce que la température dite de sécurité se situe entre 40°C et 70°C,

7. Appareil selon l'une des revendications 1 à 6 caractérisé en ce qu'une deuxième substance subit une transition à une seconde température lorsque ladite température de référence (Tr) est égale à une température (TPAE) indicatrice d'un appareil prêt à l'emploi.

8. Appareil selon les revendications 5 à 7 caractérisé en ce que la première substance et la seconde substance sont disposées sur un seul réducteur de température.

9. Appareil selon la revendication 7 et une des revendications 4 à 6 caractérisé en ce que la première substance et la seconde substance sont disposées sur des réducteurs de température différents.

10. Appareil selon l'une des revendications 1 à 9 caractérisé en ce qu'il est prévu plusieurs couples réducteur/substance qui sont répartis en des endroits différents de l'appareil pour pouvoir être vus dans plusieurs directions.

11. Appareil selon l'une des revendications 1 à 10 caractérisé en ce que le corps chaud est constitué soit par une semelle d'un fer à repasser, soit par une plaque d'une table de cuisson ou de chauffage, soit par une paroi d'un four de cuisson, d'un conditionneur d'air, d'un appareil de chauffage ou d'un grille-pain.

## Patentansprüche

1. Thermisch wirkende Vorrichtung (30) mit einem Wärmekörper (31) und einer Anzeige zur Darstellung einer Temperatur des Wärmekörpers mit Hilfe wenigstens einer Substanz, die einen Übergang einer sichtbaren Eigenschaft zeigt, wenn die Temperatur (Tc) des Wärmekörpers eine Bezugstemperatur (Tr) erreicht, wobei die genannte Substanz eine niedrigere Zerstörungstemperatur (Td) hat als die maximale Temperatur (Tm) des Wärmekörpers,
dadurch gekennzeichnet, daß ein Temperaturminderer (10) verwendet wird, der dazu dient, einen thermischen Gradienten zwischen der Temperatur (Tc) des Wärmekörpers und der Temperatur (Ts) der genannten Substanz enstehen zu lassen, der so definiert ist, daß letztere die genannte Zerstörungstemperatur (Td) nicht erreichen kann.

2. Vorrichtung nach Anspruch 1, dadurch gekennzeichnet, daß die genannte Substanz ein Flüssigkristall ist.

3. Vorrichtung nach einem der Ansprüche 1 oder 2, dadurch gekennzeichnet, daß der Minderer entweder aus einer dünnen und/oder schmalen Lamelle besteht, die einen thermischen Widerstand eines Radiators bildet, oder aus einem Träger, der mit einem einen Gradienten erzeugenden Draht verbunden ist, oder aus einem Sockelteil, der einen thermischen Gradienten erzeugt.

4. Vorrichtung nach einem der Ansprüche 1 bis 3, dadurch gekennzeichnet, daß die sichtbare Eigenschaft entweder eine Färbung oder ein optischer Leitungs-/Reflexionskoeffizient ist.

5. Vorrichtung nach einem der Ansprüche 1 bis 4, dadurch gekennzeichnet, daß eine erste Substanz einen Übergang bei einer Temperatur erfährt, wenn die genannte Bezugstemperatur (Tr) gleich einer sogenannten Benutzungssicherheitstemperatur (TCo) entspricht.

6. Vorrichtung nach einem der Ansprüche 1 bis 5, dadurch gekennzeichnet, daß die sogenannte Sicherheitstemperatur zwischen 40°C und 70°C liegt.

7. Vorrichtung nach einem der Ansprüche 1 bis 6, dadurch gekennzeichnet, daß eine zweite Substanz einen Übergang bei einer Temperatur erfährt, wenn die genannte Bezugstemperatur (Tr) gleich einer Temperatur (TPAE) ist, die anzeigt, daß eine Vorrichtung einsatzbereit ist.

8. Vorrichtung nach einem der Ansprüche 5 bis 7, dadurch gekennzeichnet, daß die erste Substanz und die zweite Substanz auf einem einzigen Temperaturminderer angebracht sind.

9. Vorrichtung nach Anspruch 7 und einem der Ansprüche 4 bis 6, dadurch gekennzeichnet, daß die erste Substanz und die zweite Substanz auf Minderern mit unterschiedlichen Temperaturen angebracht sind.

10. Vorrichtung nach einem der Ansprüche 1 bis 9, dadurch gekennzeichnet, daß verschiedene Minderer/Substanzpaare verwendet werden, die auf verschiedene Stellen der Vorrichtung verteilt sind, damit sie aus verschiedenen Richtungen gesehen werden können.

11. Vorrichtung nach einem der Ansprüche 1 bis 10, dadurch gekennzeichnet, daß der Wärmekörper durch die Sohle eines Bügeleisens, durch die Heizplatte einer Koch-oder Wärmplatte, die Wand eines Backofens, ein Klimatisierungsgerät, eine Heizvorrichtung oder einen Grill gebildet wird.

## Claims

1. A thermal-effect appliance (30) comprising a thermal body (31) and an indicator for indicating a temperature of the thermal body with the aid of a substance having a transition of a visual property when the temperature (Tc) of the thermal body reaches a reference temperature,
characterized in that said substance has a destruction temperature (Td) lower than the maximum temperature (Tm) of the thermal body, and there has been provided a temperature reducer (10) intended to impose a thermal gradient between the temperature (Tc) of the thermal body and the temperature (Ts) of said substance, defined so as to achieve that the latter cannot reach said destruction temperature.

2. An appliance as claimed in Claim 1, characterized in that said substance is a liquid crystal.

3. An appliance as claimed in Claim 1 or 2, characterized in that the reducer is constituted by a thin and/or narrow strip, or by a radiator, or by a base connected to a gradient-forming wire, or by a base portion forming a thermal gradient.

4. An appliance as claimed in any one of the Claims 1 to 3, characterized in that the visual property is either a coloration or an optical reflection/transmission coefficient.

5. An appliance as claimed in any one of the Claims 1 to 4, characterized in that it comprises a first substance which exhibits a transition at a first temperature when said reference temperature (Tr) is equal to a so-called safe temperature (TCo).

6. An appliance as claimed in any one of the Claims 1 to 5, characterized in that said safe temperature lies between 40°C and 70°C.

7. An appliance as claimed in any one of the Claims 1 to 6, characterized in that it comprises a second substance which exhibits a transition at a second temperature when said reference temperature (Tr) is equal to a temperature (TPAE) indicative of the fact that an appliance is ready for use.

8. An appliance as claimed in Claims 5 to 7, characterized in that the first substance and the second substance are disposed on a single temperature reducer.

9. An appliance as claimed in Claim 7 and in any one of the Claims 4 to 6, characterized in that the first substance and the second substance are disposed on different temperature reducers.

10. An appliance as claimed in any one of the Claims 1 to 9, characterized in that it comprises a plurality of reducer/substance combinations arranged on the appliance at different locations so as to be visible from a plurality of directions.

11. An appliance as claimed in any one of the Claims 1 to 10, characterized in that the thermal body is constituted by a soleplate of a flat-iron, or by a plate of a cook-top or of a hot-plate, or by a wall of a cooking oven, of an air conditioner, of a heating appliance or of a toaster.
